# EUROPÄISCHE PATENTSCHRIFT

(11) **EP 0 834 691 B1**
(45) Veröffentlichungstag und Bekanntmachung des Hinweises auf die Patenterteilung: **04.06.2003**
(21) Anmeldenummer: 97116776.2
(22) Anmeldetag: 26.09.1997
(51) Int. Cl.: F16K 11/078

(54) **Sanitärarmatur**
Sanitary valve
Robinet sanitaire

(30) Priorität: 01.10.1996 DE 19640509
(43) Veröffentlichungstag der Anmeldung: 08.04.1998
(73) Patentinhaber: Hansgrohe AG, 77761 Schiltach (DE)
(72) Erfinder: Lorch, Werner, 78713 Schramberg (DE); Grohe, Klaus, 77761 Schiltach (DE)
(74) Vertreter: Patentanwälte Ruff, Wilhelm, Beier, Dauster & Partner

(56) Entgegenhaltungen:
- EP-A- 0 246 405
- EP-A- 0 504 427
- WO-A-91/08532
- DE-A- 4 120 024
- DE-A- 4 423 853
- US-A- 3 840 046

## Beschreibung

Die Erfindung geht aus von einer Sanitärarmatur mit einem Mischventil, insbesondere einem Thermostaten.

Thermostatventile haben zwei Betätigungselemente, nämlich ein Element zum Einstellen der Temperatur mit Hilfe des Thermostaten und ein zweites Betätigungselement zum Öffnen und Schließen des zum Auslauf führenden Ventils. Dabei wird häufig der Thermostat nur einmal eingestellt und bleibt dann für lange Zeit auf immer einer Temperatur stehen.

Zum Umschalten des Wasserauslaufs, beispielsweise zwischen einem Wannenauslauf und einer Handbrause, ist meistens ein weiteres Betätigungselement vorhanden, das an der Armatur selbst oder auch entfernt von dieser angebracht sein kann.

Zur Vereinfachung der Bedienung ist es bereits bekannt (EP-A-246 405), eine Sanitärarmatur so auszubilden, daß das Mengenregulierventil, das die Menge des von dem Thermostaten kommenden Mischwassers steuert, auch zur Umschaltung zwischen zwei Ausläufen verwendet wird. Hier besteht jedoch die Gefahr eines sogenannten Crossflow, nämlich das Eindringen von Wasser beispielsweise aus der Kaltwasserleitung in die Warmwasserleitung. Um dieses zu verhindern, müssen vor dem Thermostatventil Rückflußverhinderer angebracht werden.

Ebenfalls bekannt ist es, vor einem Thermostaten in der Kaltund in der Warmwasserleitung je ein eigenes Absperrventil anzuordnen und die beiden getrennten Absperrventile über ein gemeinsames Stellelement zu betätigen. Da die beiden Absperrventile aber nicht exakt aufeinander abstimmbar sind, muß zwischen dem gemeinsamen Betätigungselement und jedem der beiden Absperrventile eine Rutschkupplung eingebaut werden. Dies kann dazu führen, daß der Benutzer beim Schließen in einer bestimmten Stellung einen deutlich erhöhten Widerstand fühlt und daher irrtümlich annimmt, das Ventil sei geschlossen. Tatsächlich bedeutet das Ansteigen des Widerstands aber nur, daß eines der beiden Ventile geschlossen ist, während das andere noch geöffnet ist.

Es ist bereits eine sanitäre Mischbatterie mit Thermostatregelung bekannt (DE-A1-4120024). Sie enthält ein Mengeneinstellventil, das ein für kaltes Wasser zuständiges Ventil und ein für warmes Wasser zuständiges Ventil aufweist, die von einem gemeinsamen Steuerelement betätigt werden. Mit dem Ventil kann nicht zwischen verschiedenen Ausläufen umgeschaltet werden.

Der Erfindung liegt die Aufgabe zugrunde, eine für den Benutzer sehr einfach zu bedienende Sanitärarmatur mit verbesserten Sicherheitsmerkmalen zu schaffen.

Zur Lösung dieser Aufgabe schlägt die Erfindung eine Sanitärarmatur mit den im Anspruch 1 genannten Merkmalen vor. Weiterbildungen der Erfindung sind Gegenstand von Unteransprüchen.

Durch die Anordnung der beiden Ventile in Strömungsrichtung vor dem Mischventil wird die Gefahr eines Crossflows vermieden. Die Verwendung eines einzigen Steuerelements, das die Öffnungsstellung beider Ventile bestimmt, beseitigt die eingangs erwähnten Nachteile, wonach Rutschkupplungen vorgesehen werden müssen.

Gemäß der Erfindung ist das Mengeneinstellventil zum Verteilen des das Mischventil verlassenden Mischwassers auf eine von mehreren Auslaßleitungen ausgebildet . Man hat somit ein Ventil, mit dem sowohl die Menge des ausströmenden Wassers als auch die Leitung, aus der es ausströmt, eingestellt werden kann.

Daduch daß erfindungsgemäß die Umschaltung zwischen den mehreren Auslaufleitungen mit Hilfe des Steuerelements des Mengeneinstellventils erfolgt, hat man ein aus wenigen Teilen aufgebautes und daher auch platzsparendes Ventil geschaffen.

Vorteilhafterweise kann vorgesehen sein, daß die Armatur einen in zwei Freiheitsgraden betätigbaren Steuerhebel als Betätigungsorgan aufweist. Der Benutzer braucht daher im Normalfall, d. h. wenn er die Temperatur nicht verändern will, nur ein einziges Betätigungsorgan zu bedienen. Die Armatur kann daher auch unter Design-Gesichtspunkten einfacher aufgebaut werden. Die beiden Betätigungsarten können so ausgebildet sein, daß sie vom Benutzer deutlich unterschieden werden können, beispielsweise eine Verdrehung zum Umschalten und eine senkrecht hierzu erfolgende Verschiebung zum Öffnen und Schließen.

Insbesondere kann vorgesehen sein, daß das Mengeneinstellventil nach Art eines Einhebelmischventils ausgebildet ist. Solche Einhebelmischventile sind bekannt und dem Benutzer auch geläufig. Hierbei kann beispielsweise vorgesehen sein, daß die bei normalen Einhebelmischventilen übliche Verdrehbewegung zur Änderung der Temperatur jetzt zum Umschalten verwendet wird, während die öffnungs- und Schließbewegung in der gleichen Weise erfolgt wie bei den üblichen Einhebelmischventilen. Dadurch werden auch unbeabsichtigte Fehlbedienungen ausgeschlossen.

Insbesondere kann erfindungsgemäß vorgesehen sein, daß das Mischventil und das Mengeneinstellventil in einem gemeinsamen Armaturengrundkörper untergebracht sind.

Erfindungsgemäß kann vorgesehen sein, daß jedes Ventil je eine in einer Steuerfläche eines feststehenden Steuerelements ausmündende Einlaßöffnung aufweist. Solche Arten der Anordnung sind bei Einhebelmischventilen bekannt, so daß hier zumindest teilweise auf bekannte und zur Verfügung stehende Elemente zurückgegriffen werden kann.

Es kann ebenfalls vorgesehen sein, daß jedes Ventil je eine in einer Steuerfläche eines feststehenden Steuerelements ausmündende Auslaßöffnung aufweist.

Das zu steuernde Kaltwasser und das zu steuernde Warmwasser treten also durch das feststehende Steuerelement in das Mengeneinstellelement ein und auch wieder aus.

Insbesondere kann vorgesehen sein, daß die Einlaßöffnung und/oder die Auslaßöffnung durch eine Steuerfläche eines bewegbaren Steuerelements mehr oder weniger verschließbar ist. Die beiden Steuerelemente liegen flächig aneinander an, und die Bewegung des bewegbaren Steuerelements erfolgt in der gemeinsamen Berührungsfläche.

Es kann vorgesehen sein, daß für beide Ventile ein gemeinsames feststehendes und/oder bewegbares Steuerelement verwendet wird. Die Öffnungen für die beiden Ventile lassen sich mit hoher Präzision herstellen, ebenso wie das bewegbare Steuerelement. Daher kann hier eine exakte Steuercharakteristik verwirklicht werden, bei der beide Ventile tatsächlich gleichzeitig schließen. Da bei einer Verschiebung der beiden Steuerelemente gegeneinander auch kein Verschieben gegen einen Anschlag erfolgt, würde selbst bei einer nicht exakten Abstimmung kein erhöhter Widerstand auftreten.

Erfindungsgemäß kann in Weiterbildung vorgesehen sein, daß die von dem Thermostatventil kommende Mischwasserleitung in einer Öffnung eines feststehenden Steuerelements ausmündet, insbesondere des für beide Ventile gemeinsamen feststehenden Steuerelements.

Das Steuerelement, in dem die Mischwasserleitung mündet, kann in Weiterbildung auch mindestens zwei Auslaßöffnungen aufweisen, von denen jede Auslaßöffnung über eine getrennte Wasserführung zu jeweils einem Anschluß für eine weiterführende Leitung führt.

Die Verbindung zwischen der Einlaßöffnung der Mischwasserleitung und den Auslaßöffnungen kann insbesondere ebenfalls durch ein bewegbares Steuerelement herstellbar sein, vorzugsweise durch das bewegbare Steuerelement, das auch die beiden Ventile steuert.

Insbesondere kann das bewegbare Steuerelement drei getrennte Wasserführungen aufweisen, so daß die drei Strömungswege vollständig voneinander getrennt bleiben.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: einen Längsschnitt durch eine Sanitärarmatur nach der Erfindung;
- Fig. 2: eine Vorderansicht der Armatur, d. h. in Fig. 1 von oben;
- Fig. 3: eine Aufsicht auf die Steuerfläche der feststehenden Steuerscheibe;
- Fig. 4: einen Querschnitt durch die feststehende Steuerscheibe der Fig. 3;
- Fig. 5: eine Aufsicht auf die zu der feststehenden Steuerscheibe der Fig. 3 gehörende bewegbare Steuerscheibe;
- Fig. 6: einen Längsschnitt durch die bewegbare Steuerscheibe der Fig. 5.

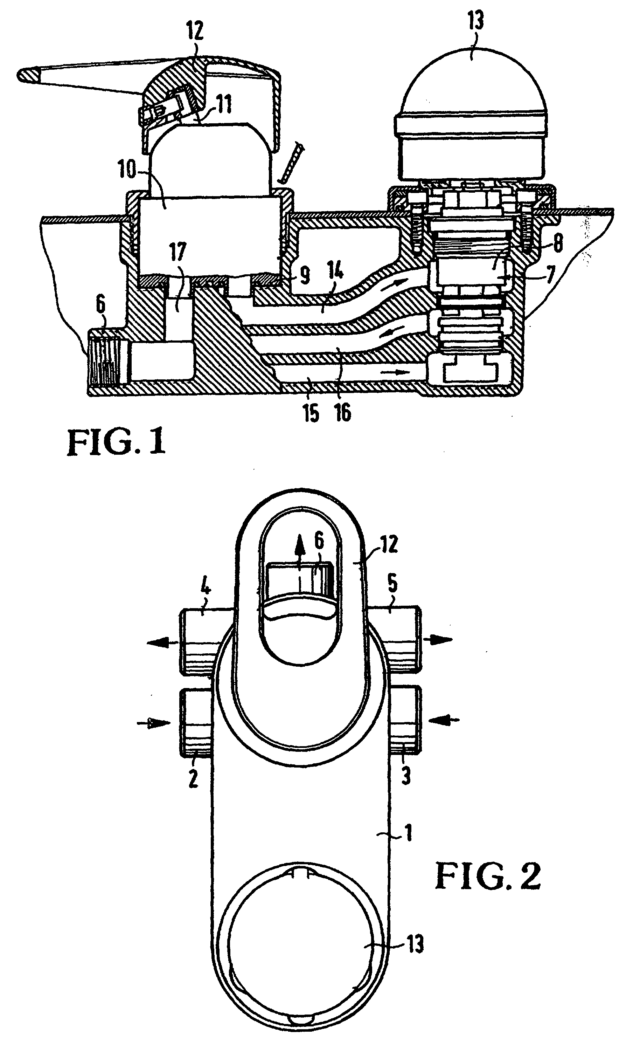

Die in Fig. 1 und 2 zu sehende Sanitärarmatur weist einen gemeinsamen Armaturengrundkörper 1 auf. Dieser Grundkörper 1 weist einen Anschluß 2 für eine Heißwasserleitung und einen Anschluß 3 für eine Kaltwasserleitung auf. Der Armaturengrundkörper wird so installiert, daß das zugeführte Heißwasser durch den Anschluß 2 und das zugeführte Kaltwasser durch den Anschluß 3 in den Grundkörper 1 gelangt.

Zusätzlich zu den beiden Eingangsanschlüssen 2, 3 enthält der Grundkörper im dargestellten Beispiel drei Ausgangsanschlüsse, nämlich einen Ausgangsanschluß 4 beispielsweise für eine Kopfbrause, einen Anschluß 5 für eine Handbrause und einen mittig angeordneten Anschluß 6 für einen Wannenauslauf. Der Anschluß 6 für den Wannenauslauf ist als Normalauslauf in Fig. 2 oben angeordnet.

Der Armaturengrundkörper enthält eine Aufnahme 7 für ein Thermostatventil 8 und eine zweite Aufnahme 9 für eine Ventilkartusche 10, mit deren Hilfe die Menge des Wassers eingestellt werden kann. Die Ventilkartusche 10 ist in ihrer äußeren Form ähnlich aufgebaut wie ein Einhebelmischventil. Zur Betätigung ragt aus der Kartusche ein Schaft 11 heraus, an dem ein üblicher Handgriff 12 befestigt ist. Der Handgriff 12 kann um eine senkrecht zur Papierebene in der Fig. 1 verlaufende Achse verschwenkt und um die Achse des Schafts 11 verdreht werden. Diese beiden Betätigungsarten sind unabhängig voneinander.

Für das Thermostatventil 8 ist ebenfalls ein Handgriff in Form eines Drehgriffs 13 vorgesehen, der durch Verdrehen auf eine bestimmte Temperatur eingestellt wird.

Innerhalb des Armaturengrundkörpers 1 sind mehrere Kanäle vorhanden, die so geführt sind, daß die Eingangsanschlüsse 2, 3 über getrennte Kanäle mit der Bodenfläche der Aufnahme 9 in Verbindung stehen. Von der Bodenfläche der Aufnahme 9 führt dann ein Kanal 14 für das warme Wasser und ein Kanal 15 für das kalte Wasser zu dem Thermostatventil 8, das bekannt ist, so daß es nicht näher beschrieben wird. Innerhalb des Thermostatventils erfolgt eine Mischung des kalten und warmen Wassers. Das Mischwasser verläßt das Thermostatventil über einen Mischwasserkanal 16, der wiederum zu der Bodenfläche der Aufnahme 9 für die Ventilkartusche 10 geführt ist.

Von der Bodenfläche des Aufnahmeraums 9 führen dann wiederum getrennte Kanäle zu den einzelnen Auslaßanschlüssen, in Fig. 1 ist einer dieser Kanäle 17 dargestellt, der zu dem Auslaßanschluß 6 für den Wannenabgang führt.

Die Ventilkartusche 10 ist so ausgebildet, daß sie ein getrenntes Ventil für das kalte Wasser und ein getrenntes Ventil für das heiße Wasser bildet, wobei die beiden Ventile in Strömungsrichtung gesehen vor dem Thermostatventil 8 angeordnet sind. Durch mehr oder weniger weites Verschwenken des Betätigungsgriffs 12 werden die beiden Ventile simultan geöffnet oder geschlossen.

Durch Verdrehen des Betätigungsgriffs 12 um eine senkrecht zur Papierebene der Fig. 2 stehende Achse wird das Mischwasser zu jeweils einem der drei Auslaßanschlüsse geschaltet. Die in Fig. 2 dargestellte neutrale Position schaltet das Mischwasser auf den Anschluß 6, der beispielsweise zum Wannenauslauf führt. Wird der Griff 12 im Uhrzeigersinn nach rechts verdreht, wird beispielsweise die Handbrause über den Anschluß 5 eingeschaltet. Eine Verdrehung im Gegenuhrzeigersinn schaltet dann die Kopfbrause über den Anschluß 4 ein.

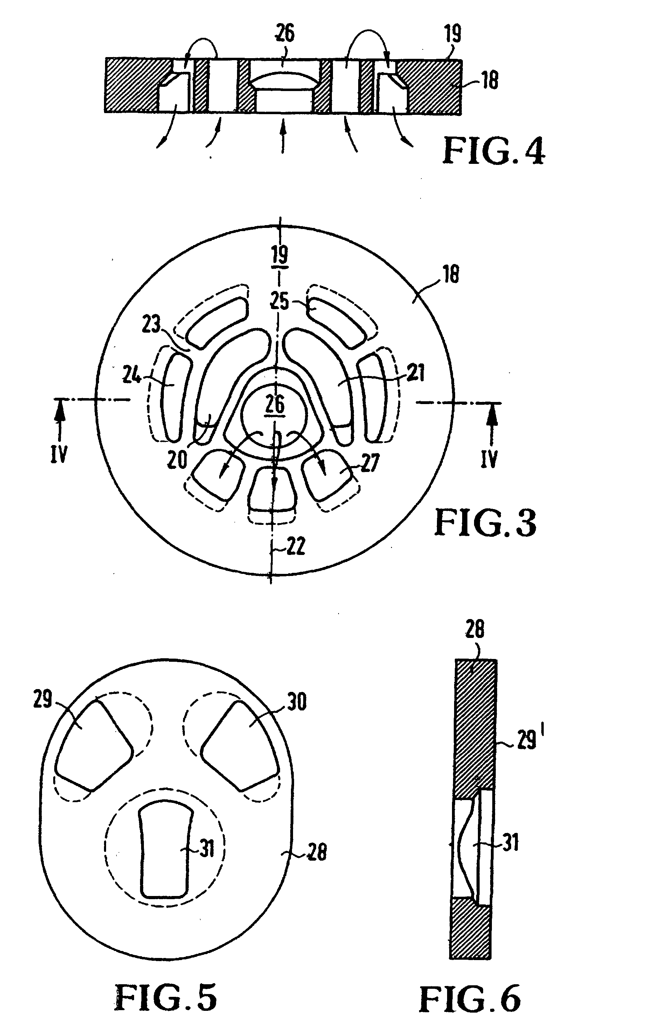

Eine der Möglichkeiten, wie das Ventil aufgebaut sein kann, ist in den Figuren 3 bis 6 dargestellt. Das Mengeneinstellventil, das die Ventilkartusche 10 enthält, ist nach Art eines Einhebelmischventils aufgebaut, enthält also beispielsweise eine in der Kartusche angebrachte feststehende Steuerscheibe 18, die auf ihrer einen Seite, in Fig. 4 der Unterseite, mit den entsprechenden bereits erwähnten Kanälen abgedichtet verbunden ist. Die Steuerscheibe kann beispielsweise aus Keramik bestehen, so daß ihre in Fig. 3 zu sehende und in Fig. 4 oben angeordnete Steuerfläche 19 sehr glatt ausgebildet ist. Die Steuerscheibe 18 weist mehrere Durchbrüche auf, die in der Steuerfläche 19 als Öffnungen münden. Es ist eine Einlaßöffnung 20 für das Heißwasser und eine Öffnung 21 für den Einlaß des Kaltwassers vorhanden. Beide Öffnungen sind zu einer strichpunktiert dargestellten Mittellinie 22 spiegelsymmetrisch angeordnet und ausgebildet. Die beiden Einlaßöffnungen 20, 21 erstrecken sich etwa bogenförmig um einen Mittelpunkt. Praktisch konzentrisch zu diesen beiden Öffnungen 20, 21 sind weiter außen je eine durch einen Steg 23 unterbrochene Auslaßöffnung 24 für das warme Wasser und eine Auslaßöffnung 25 für das kalte Wasser vorhanden. Die Stege 23 dienen einer Verstärkung der Platte, sind aber für die Funktion unwesentlich.

In der dargestellten Ausführungsform sind die weiter innenliegenden Öffnungen 20 und 21 die Einlaßöffnungen, und die weiter außen liegenden Öffnungen 24, 25 die Auslaßöffnungen. Es ist ebenfalls möglich und wird von der Erfindung vorgeschlagen, daß dies umgekehrt ist, daß also die weiter außen liegenden Öffnungen ggfls. ohne den Steg 23, die Einlaßöffnungen und die weiter innen liegenden Öffnungen die Auslaßöffnungen für diesen Teil der Steuerung sind.

Zusätzlich zu den Einlaß- und Auslaßöffnungen für das zu dem Thermostatventil fließende Wasser enthält die feststehende Steuerscheibe eine mittlere Öffnung 26, die mit dem Mischwasserkanal 16 verbunden ist. Aus dieser in der Steuerfläche 19 ausmündenden Öffnung 26 tritt das Mischwasser in die Steuerfläche ein.

Benachbart zu dieser Einlaßöffnung 26 für das Mischwasser sind drei Auslaßöffnungen 27 für das Mischwasser in der Steuerscheibe 18 ausgebildet. Jede dieser Auslaßöffnungen 27 steht mit einem getrennten Auslaßkanal 17 in Verbindung.

Fig. 5 zeigt eine Aufsicht auf die der feststehenden Steuerscheibe 18 zugeordnete bewegbare Steuerscheibe 28 aus der gleichen Richtung, d. h. von der der Steuerfläche der bewegbaren Steuerscheibe 28 entgegengesetzten Seite.

Die Steuerfläche 29 ist die in Fig. 6 rechte Unterseite der bewegbaren Steuerscheibe 28, die auf der Steuerfläche 19 aufliegt. Die bewegbare Steuerscheibe 28 weist drei getrennte Durchbrüche 29, 30 und 31 auf. In zusammengesetztem Zustand liegt auf der in Fig. 5 zu sehenden Oberseite der bewegbaren Steuerscheibe 28 eine Abdeckplatte, die die einzelnen Durchbrüche 29 bis 31 voneinander trennt. Der dann zur Oberseite hin abgeschlossene Durchbruch 29 dient zum Herstellen und Beseitigen einer Verbindung zwischen der Einlaßöffnung 20 und den Auslaßöffnungen 24, während der Durchbruch 30 für die Öffnungen 21 und 25 zuständig ist.

Der dritte Durchbruch 31 dient zur Herstellung einer Verbindung zwischen der Öffnung 26 und jeweils einer der Auslaßöffnungen 27.

Zum mehr oder weniger weiten simultanen Öffnen der zu dem Thermostatventil führenden Einlaßventile wird die Scheibe 28 in ihrer eigenen Längsrichtung verschoben. Zum Umschalten des Mischwassers auf die einzelnen Auslässe wird sie verdreht. Die Öffnungen sind so angeordnet, daß eine Verdrehung nicht zu einer Änderung der Menge führt, während unabhängig von der Winkelposition der bewegbaren Steuerscheibe 28 eine Verschiebung in Längsrichtung immer zu einer gleichmäßigen öffnungs-bzw. Schließbewegung der Einlaßventile führt.

In dem dargestellten Ausführungsbeispiel wurde ein Scheibenventil beschrieben. Die Erfindung kann aber nicht nur mit Hilfe von Scheibenventilen verwirklicht werden, sondern mit allen Arten von Ventilen, bei denen sich ein Steuerelement in zwei Freiheitsgraden bewegen läßt, beispielsweise bei Kolbenventilen und Kugelventilen. Bei Kolbenventilen ist dann der feststehende Zylinder das feststehende und der bewegbare Kolben das bewegbare Steuerelement.

Anstelle eines Thermostaten, der mechanisch oder elektronisch arbeiten kann, könnte auch ein Mischventil vorgesehen sein, beispielsweise ein Mischventil, mit dem nur die Temperatur eingestellt werden kann.

Insbesondere kann das Mischventil mit einem Druckausgleichsventil kombiniert sein.

## Patentansprüche

1. Sanitärarmatur, mit
1.1 einem Kaltwasserzulauf (3),
1.2 einem Warmwasserzulauf (2),
1.3 einem Mischventil, insbesondere einem Thermostaten (8), sowie mit
1.4 einem Mengeneinstellventil, das
1.4.1 ein in dem zu dem Mischventil (8) führenden Kaltwasserzulauf angeordnetes Ventil,
1.4.2 ein in dem zu dem Mischventil (8) führenden Warmwasserzulauf angeordnetes Ventil und
1.4.3 ein die Öffnungsstellung beider Ventile gemeinsam bestimmendes Steuerelement aufweist,
**dadurch gekennzeichnet, dass**
1.5 in einem von dem Mischventil (8) kommenden Mischwasserkanal (16) ein Umstellerventil mit mehreren Auslaufleitungen (4, 5, 6) angeordnet ist, das
1.6 von dem Steuerelement des Mengeneinstellventils betätigt wird.

2. Sanitärarmatur nach einem der vorhergehenden Ansprüche, bei der die Armatur einen in mindestens einer Betätigungsart betätigbaren Steuerhebel als Betätigungsorgan aufweist.

3. Sanitärarmatur nach Anspruch 1 oder 2, bei der das Mengeneinstellventil nach Art eines Einhebelmischventils ausgebildet ist.

4. Sanitärarmatur nach einem der vorhergehenden Ansprüche, bei der das Mischventil (8) und das Mengeneinstellventil in einem gemeinsamen Armaturengrundkörper (1) untergebracht sind.

5. Sanitärarmatur nach einem der vorhergehenden Ansprüche, bei der jedes Ventil des Mengeneinstellventils je eine in einer Steuerfläche (19) eines feststehenden Steuerelements (18) ausmündende Einlaßöffnung (20, 21) aufweist

6. Sanitärarmatur nach einem der vorhergehenden Ansprüche, bei der jedes Ventil des Mengeneinstellventils je eine in einer Steuerfläche (19) eines feststehenden Steuerelements (18) mündende Auslaβöffhung (24, 25) aufweist.

7. Sanitärarmatur nach einem der Ansprüche 5 oder 6, bei der die Einlaßöffnung (20, 21) und/oder die Auslaßöffnung (24, 25) durch eine Steuerfläche (29) eines in der gemeinsamen Berührungsfläche bewegbaren Steuerelements (28) verschließbar ist.

8. Sanitärarmatur nach einem der Ansprüche 5 bis 7, mit einem für beide Ventile des Mengeneinstellventils gemeinsamen feststehenden (18) und/oder bewegbaren Steuerelement (28).

9. Sanitärarmatur nach einem der Ansprüche 5 bis 8, bei der die von dem Mischventil (8) kommende Mischwasserleitung (16) in einer Öffnung (26) eines feststehenden Steuerelements (18) mündet.

10. Sanitärarmatur nach Anspruch 9, bei der das feststehende Steuerelement (18) mindestens zwei Auslaßöffnungen (27) aufweist, die mit je einem Auslaβanschluβ (4,5,6) verbunden sind.

11. Sanitärarmatur nach Anspruch 10, bei der die Verbindung zwischen der Einlaßöffnung (26) für das Mischwasser und den Auslaβöffnungen (27) durch ein bewegbares Steuerelement (28) herstellbar ist.

12. Sanitärarmatur nach einem der Ansprüche 9 bis 11, bei der das den Mischwasseröffnungen zugeordnete Steuerelement (28) das den Einlaßventilen zugeordnete Steuerelement ist.

13. Sanitärarmatur nach einem der Ansprüche 7 bis 12, bei der das bewegbare Steuerelement (28) drei getrennte Wasserführungen aufweist und/oder bildet.

14. Sanitärarmatur nach einem der vorhergehenden Ansprüche, bei der die Steuerelemente die Steuerelemente eines Kolbenventils sind.

15. Sanitärarmatur nach einem der vorhergehenden Ansprüche, bei der die Steuerelemente die Steuerelemente eines Kugelventils sind.

16. Sanitärarmatur nach einem der vorhergehenden Ansprüche, bei der die Steuerelemente die Steuerscheiben eines Scheibenventils sind.

## Claims

1. Sanitary fitting with
1.1 a cold water inlet (3),
1.2 a hot water inlet (2),
1.3 a mixing valve, particularly a thermostat (8), as well as with
1.4 a quantity adjusting valve, which
1.4.1 has a valve located in the cold water inlet leading to the mixing valve (8),
1.4.2 a valve located in the hot water inlet leading to the mixing valve (8) and
1.4.3 a control element jointly determining the open position of both valves,
**characterized in that**
1.5 in a mixed water channel (16) coming from the mixing valve (8) is provided a reversing valve with several outlet pipes (4, 5, 6), which
1.6 is operated by the control element of the quantity adjusting valve.

2. Sanitary fitting according to one of the preceding claims, wherein the fitting has as the operating member a control lever operable in at least one operating mode.

3. Sanitary fitting according to claim 1 or 2, wherein the quantity adjusting valve is constructed in the manner of a single lever mixing valve.

4. Sanitary fitting according to one of the preceding claims, wherein the mixing valve (8) and quantity adjusting valve are housed in a common fitting body (1).

5. Sanitary fitting according to one of the preceding claims, wherein each valve of the quantity adjusting valve has an inlet (20, 21) issuing into a control surface (19) of a fixed control element (18).

6. Sanitary fitting according to one of the preceding claims, wherein each valve of the quantity adjusting valve has an outlet (24, 25) issuing into a control surface (19) of a fixed control element (18).

7. Sanitary fitting according to one of the claims 5 or 6, wherein the inlet (20, 21) and/or outlet (24, 25) can be closed by a control surface (29) of a control element (28) movable in the common contact surface.

8. Sanitary fitting according to one of the claims 5 to 7, with a fixed (18) and/or movable (28) control element common to both valves of the quantity adjusting valve.

9. Sanitary fitting according to one of the claims 5 to 8, wherein the mixed water pipe (16) coming from the mixing valve (8) issues into an opening (27) of a fixed control element (18).

10. Sanitary fitting according to claim 9, wherein the fixed control element (18) has at least two outlets (27), which are in each case connected to an outlet connection (4, 5, 6).

11. Sanitary fitting according to claim 10, wherein the connection between the inlet (26) for the mixed water and the outlets (27) can be produced by a movable control element (28).

12. Sanitary fitting according to one of the claims 9 to 11, wherein the control element (28) associated with the mixed water openings is the control element associated with the inlet valves.

13. Sanitary fitting according to one of the claims 7 to 12, wherein the movable control element (28) has and/or forms three separate water ducts.

14. Sanitary fitting according to one of the preceding claims, wherein the control elements are the control elements of a piston-type valve.

15. Sanitary fitting according to one of the preceding claims, wherein the control elements are the control elements of a ball valve.

16. Sanitary fitting according to one of the preceding claims, wherein the control elements are the control disks of a disk valve.

## Revendications

1. Robinet sanitaire comprenant
1.1 une arrivée d'eau froide (3)
1.2 une arrivée d'eau chaude (2)
1.3 une vanne mélangeuse, en particulier un thermostat (8), ainsi
1.4 qu'une vanne de réglage de débit, qui
1.4.1 présente une vanne disposée dans l'arrivée d'eau froide débouchant à la vanne mélangeuse (8),
1.4.2 une vanne disposée dans l'arrivée d'eau chaude débouchant dans la vanne mélangeuse (8) et
1.4.3 un élément de commande déterminant en commun la position d'ouverture des deux vannes,
**caractérisé**
1.5 **en ce qu'**il est disposé dans un canal d'eau mélangé (16) venant de la vanne mélangeuse (8) une vanne inverseur avec plusieurs conduites d'écoulement (4, 5, 6)
1.6 qui est actionnée par l'élément de commande de la vanne de réglage de débit

2. Robinet sanitaire selon l'une des revendications précédentes, dans lequel le robinet présente comme organe d'activation une manette de commande actionnable dans au moins un mode d'actionnement.

3. Robinet sanitaire selon la revendication 1 ou 2, dans lequel la vanne de réglage de débit est réalisée comme une vanne de mélange à un levier.

4. Robinet sanitaire selon l'une des revendications précédentes, dans lequel la vanne mélangeuse (8) et la vanne de réglage de débit sont logées dans un corps de base commun (1) de robinet.

5. Robinet sanitaire selon l'une des revendications précédentes, dans lequel chaque vanne de la vanne de réglage de débit présente une ouverture d'entrée (20, 21) débouchant dans une surface de commande (19) d'un élément de commande fixe (18).

6. Robinet sanitaire selon l'une des revendications précédentes, dans lequel chaque vanne de la vanne de réglage de débit présente une ouverture de sortie (24, 25) débouchant dans une surface de commande (19) d'un élément de commande fixe (18).

7. Robinet sanitaire selon l'une des revendications 5 ou 6, dans lequel l'ouverture d'entrée (20, 21) et/ou l'ouverture de sortie (24, 25) peut être fermée par une surface de commande (29) d'un élément de commande (28) mobile dans la surface commune de contact.

8. Robinet sanitaire selon l'une des revendications 5 à 7, comprenant un élément de commande (28) mobile et/ou fixe (18) pour les deux vannes de la vanne de réglage de débit.

9. Robinet sanitaire selon l'une des revendications 5 à 8, dans lequel la conduite d'eau mélangée (16) provenant de la vanne mélangeuse (8) débouche dans une ouverture (26) de l'élément de commande fixe (18).

10. Robinet sanitaire selon la revendication 9, dans lequel l'élément de commande fixe (18) présente au moins deux ouvertures de sortie (27), qui sont reliées chacune à un raccord d'écoulement (4, 5, 6).

11. Robinet sanitaire selon la revendication 10, dans lequel la connexion entre l'ouverture d'entrée (6) pour l'eau mélangée et les ouvertures d'écoulement (27) peut être établie par un élément de commande mobile (28).

12. Robinet sanitaire selon l'une des revendications 9 à 11, dans lequel l'élément de commande (28) associé aux ouvertures d'eau mélangé est l'élément de commande associé aux vannes d'entrée.

13. Robinet sanitaire selon l'une des revendications 7 à 12, dans lequel l'élément de commande mobile (28) présente et/ou forme trois arrivées d'eau séparée.

14. Robinet sanitaire selon l'une des revendications précédentes, dans lequel les éléments de commande sont les éléments de commande d'une vanne à piston.

15. Robinet sanitaire selon l'une des revendications précédentes, dans lequel les éléments de commande sont les éléments de commande d'une vanne sphérique.

16. Robinet sanitaire selon l'une des revendications précédentes, dans lequel les éléments de commande sont les disques de commande d'une vanne en disque.
